# EUROPÄISCHE PATENTSCHRIFT

(11) **EP 0 513 788 B1**
(45) Veröffentlichungstag und Bekanntmachung des Hinweises auf die Patenterteilung: **23.10.1996**
(21) Anmeldenummer: 92108156.8
(22) Anmeldetag: 14.05.1992
(51) Int. Cl.: F16L 58/14

(54) **Rohr mit Auskleidung**
Lined pipe
Tuyau avec revêtement

(30) Priorität: 14.05.1991 DE 4115735
(43) Veröffentlichungstag der Anmeldung: 19.11.1992
(73) Patentinhaber: Philipp Holzmann AG, D-60329 Frankfurt (DE)
(72) Erfinder: Wind, Heinz, Dipl.-Ing., W-6242 Kronberg (DE)
(74) Vertreter: Melzer, Wolfgang, Dipl.-Ing.

(56) Entgegenhaltungen:
- DE-A- 3 935 172

## Beschreibung

Die Erfindung betrifft ein Verfahren zum Herstellen eines Rohrs aus zementgebundenen Materialien und einer ein Glasrohr aufweisenden Auskleidung sowie ein entsprechendes Rohr.

Rohre dieser Art werden dann verwendet, wenn die zementgebundenen Materialien angreifende Stoffe durch das Rohrinnere oder an dem Rohräußeren vorbei strömen könnten. Bisher werden hierzu Kunststoffauskleidungen mit Verankerungsrippen verwendet. Dieses Material ist nicht für alle strömenden Stoffe geeignet, wobei darüberhinaus auch Umweltschutzgründe gegen die Verwendung von Kunststoffauskleidungen sprechen. Darüberhinaus ist eine einfache Verbindung zwischen den zementgebundenen Materialien und der Auskleidung nicht möglich, vielmehr sind aufwendig vorzusehende Verankerungsrippen notwendig.

Darüberhinaus ist nachteilig, daß Temperaturschwankungen, aber auch Belastungen auf die beiden Materialien in unterschiedlicher Weise einwirken, wodurch ein unerwünschter Ablösungsprozeß eingeleitet werden könnte.

Ein Rohr aus zementgebundenen Materialien und eine ein Glasrohr aufweisenden Auskleidung ist grundsätzlich bekannt aus DE-A1-39 35 172. Wesentlich ist jedoch, daß von einem bestehenden, d. h. ausgehärtetem Betonrohr ausgegangen wird. Unwesentlich ist, ob es sich um ein altes, bereits verlegtes Betonrohr oder ein relativ neues aus einer Fertigung stammendes Betonrohr handelt. Innerhalb des ausgehärteten Betonrohrs wird ein Glasrohr positioniert, beispielsweise über Montagestützen oder dgl., wobei anschließend zwischen dem Betonrohr und dem Glasrohr eine Hinterfüllmasse offensichtlich unter einem gewissen Druck eingefüllt wird, wodurch eine sichtbare Grenze zwischen der vorgefertigten Betonschicht und der nachgegossenen Hinterfüllschicht erscheint. Diese Vorgehensweise ist offensichtlich ziemlich umständlich und setzt das Vorhandensein von Betonrohren voraus. Eine enge Verbindung des Glasrohrs mit dem Betonrohr erscheint nicht möglich, vielmehr ist eine etwa federnde Lagerung des Glasrohrs in dem Betonrohr mit Hilfe der Hinterfüllmasse erreicht.

Demgegenüber ist es Aufgabe der Erfindung, ein Verfahren anzugeben, wie ein Rohr der vorstehenden Art derart hergestellt werden kann, daß eine feste Verbindung zwischen beiden erreicht ist.

Die Aufgabe wird durch die Merkmale des Anspruches 1 bzw. des Anspruches 4 gelöst.

Die Erfindung wird durch die Merkmale der Unteransprüche weitergebildet.

Von großem Vorteil bei der Erfindung ist, daß ein sicherer Verbund zwischen den zementgebundenen Materialien einerseits und dem Glas andererseits in einfacher Weise erzielt werden kann, wobei darüber hinaus Glas selbst gegenüber aggressiven Materialien höchst resistent ist. Insbesondere können die Glasrohre gegebenenfalls auch vor Ort direkt einbetoniert werden. Die den ein Tragrohr bildenden zementgebundenen Materialien zugewandte Seite kann dabei glatt sein, aber auch abschnittsweise glatt und mit Glasfritte und sonstigen Verankerungen versehen sein. Ferner können auch nur umhüllende oder vorgespannte Umwicklungen aus Bändern, Folien, Vliesen und Geweben vorgesehen sein, wobei diese aus Metallen, Mineralien, Kunststoffen und dgl. bestehen können. Vliesähnliche Materialien gewährleisten den Ausgleich unterschiedlicher Verformungen von Glasrohr einerseits und Tragrohr andererseits, aber auch des gesamten Verbundes.

Ein solches Rohr kann auch so ausgebildet werden, daß es im Kopfbereich Verformungen erfahren kann, obgleich solche von der Glasauskleidung selbst direkt nicht aufgenommen werden können. Zu diesem Zweck wird in diesen Bereichen ein volumenveränderliches verzwängungsfreies Material vorgesehen.

Bei der Herstellung ist wesentlich, daß ein integriertes Herstellverfahren verwendet wird, bei dem die durch das Glasrohr gebildete Auskleidung zusammen mit dem Tragrohr hergestellt wird. Die Glasauskleidung wirkt dabei nach Art einer verloreren Schalung. Sie wird durch einen horizontalen oder vertikalen Stützrahmen gehalten. Im ersteren Fall kann es erforderlich sein, insbesondere bei kleineren Rohrdurchmessern Abstandshalter im Sohlebereich der Lage der Glasauskleidung zu halten. Bei größeren Durchmessern kann das Glasrohr auf einen Schalungsrahmen angebracht sein, der außerhalb der Rohrschalung gehalten wird. Beispielsweise kann ein Schalungsrahmen rotiert werden und können die zementgebundenen Materialien, wie Spritzbeton mit Bewehrung oder Faserspritzbeton zur tragfähigen Konstruktion als Tragrohr aufgespritzt werden.

Die Erfindung wird anhand der in der Zeichnung dargestellten Ausführungsbeispiele näher erläutert. Es zeigen
- Fig. 1: im Schnitt ein erstes Ausführungsbeispiel der Erfindung;
- Fig. 2: ein zweites Ausführungsbeispiel;
- Fig. 3 und Fig. 4: im Schnitt Weiterbildungen des Rohrs gemäß Fig. 1;
- Fig.5: schematisch eine Vorrichtung zur Durchführung eines ersten Herstellverfahrens;
- Fig.6: schematisch eine Vorrichtung zur Durchführung eines zweiten Herstellverfahrens.

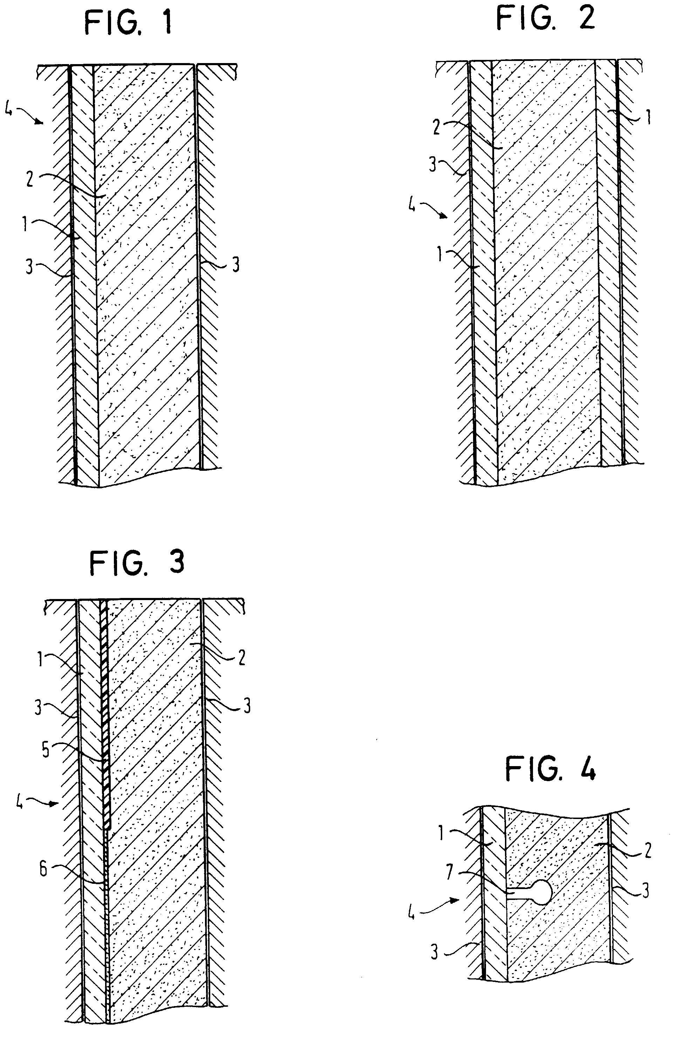

Fig. 1 zeigt im Schnitt das Stirnende einer Rohrwand, welche einerseits aus einem innenliegenden Glasrohr 1 und einem Tragrohr 2 aus zementgebundenen Materialien besteht. Die Gesamtanordnung ist für Fertigungszwecke zwischen einer innenliegenden und einer außenliegenden Schalung 3 vorgesehen. Insgesamt wird somit ein erfindungsgemäßes Rohr gebildet, bei dem das Glasrohr 1 eine abdichtende Auskleidung darstellt.

Gemäß Fig. 2 kann ein solches Glasrohr nicht nur an der Innenseite, sondern zusätzlich oder lediglich an der Außenseite vorgesehen sein.

Gemäß Fig. 3 ist zwischen dem Glasrohr 1 einerseits und dem Tragrohr 2 andererseits des erfindungsgemäßen Rohrs 4 stirnseitig ein volumenveränderliches zwängungsfreies Material 5 vorgesehen, wodurch das Rohr 4 nach Fertigstellung direkt mit Pressen in den Untergrund getrieben werden kann, ohne daß unzulässige Verformungen im Kopfbereich auftreten würden.

Eine gute Haftung zwischen dem Tragrohr 2 aus den zementgebundenen Materialien einerseits und dem Glasrohr 1 andererseits ist auch bei glatter Fläche des Glasrohrs 1 erreichbar. Verbessert wird die Haftung durch Vorsehen einer Glasfritte 6 (Fig. 3) und/oder einem anderem Verankerungsmittel, wie das in Fig. 4 durch das Bezugszeichen 7 dargestellt ist.

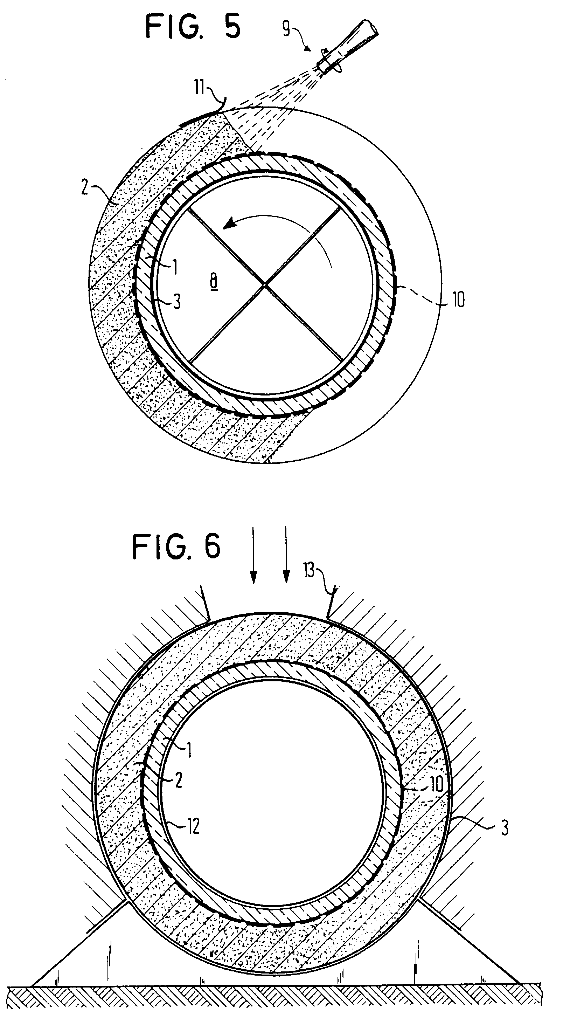

Fig. 5 zeigt eine erste Vorrichtung zu Durchführungen des ersten Herstellverfahrens. Bei diesem wird das ein- oder mehrteilige Glasrohr 1 auf einem innenliegenden Schalungsgerüst 8 aufgebracht, wobei das Schalungsgerüst 8 rotierbar ist. Das Glasrohr 1 kann vorteilhaft mittels einer vorspannbaren Umwicklung 10 umgeben sein, wobei diese Umwicklung 10 aus Bändern, Folien, Vliesen und Geweben bestehen kann, wobei als Materialien Metalle, Mineralien und Kunststoffe infrage kommen. Ferner können an der Außenseite des Glasrohrs 1, wie erwähnt, stirnseitig die volumenveränderlichen zwängungsfreien Materialien 5 und/ oder die Verankerungsmittel 7 oder Glasfritten 6 vorgesehen sein. Anschließend werden mittels einer Spritzeinrichtung 9 die zementgebundenen Materialien zur Bildung des Tragrohrs 2 aufgebracht, wobei zweckmäßig ein Führungsgleitblech 11 vorgesehen ist, um einen im wesentlichen konstanten Außenumfang des so hergestellten Rohrs 4 zu gewährleisten. Diese Anordnung eignet sich insbesondere für Herstellung in vertikaler Anordnung.

Fig. 6 zeigt eine zweite Vorrichtung, die sich insbesondere für eine Herstellung in horizontaler Anordnung eignet. Auch hier wird zunächst das Glasrohr 1 angeordnet, wobei es gegebenenfalls ebenfall mit einer Umwicklung 10 versehen sein kann. Bei kleinen Rohrdurchmessern ist das Glasrohr 1 durch nicht dargestellte Stützkörper in der Schalung 3 abzustützen. Bei größeren Rohrdurchmessern ist ein innenliegender Schalungsstützkörper 12 vorgesehen, bei dem es sich beispielsweise um einen aufblasbaren Druckschlauch handeln kann. Der innenliegende Schalungsstützkörper 12 wird zentrisch innerhalb der Schalung 3 abgestützt, wobei der Schalungsstützkörper 12 aus der Schalung 3 herausragen kann. Anschließend werden durch eine Einbringöffnung 13 in der Schalung 3 die zementgebundenen Materialien zur Bildung des Tragrohrs 12 eingebracht.

Selbstverständlich wird die Schalung 3 erst nach Aushärten des Materials entfernt.

Die gleiche Vorgehensweise ist anwendbar, wenn das Glasrohr 1 an der Außenseite eines so hergestellten Rohres 4 vorgesehen sein soll.

## Patentansprüche

1. Verfahren zum Herstellen eines Rohrs aus zementgebundenen Materialien und einer ein Glasrohr aufweisenden Auskleidung,
dadurch **gekennzeichnet**,
daß das Glasrohr (1) auf einem Schalungsgerüst (8) angeordnet wird und die zementgebundenen Materialien (2) hierauf aufgespritzt werden unter Relativ-Drehbewegung zwischen dem Glasrohr (1) und der Spritzeinrichtung (9) für die zementgebundenen Materialien (2).

2. Verfahren zum Herstellen eines Rohr aus zementgebundenen Materialien und einer ein Glasrohr aufweisenden Auskleidung, bei dem das Glasrohr (1) abgestützt wird,
dadurch **gekennzeichnet**,
daß das Glasrohr (1) in einer Schalung (3) im wesentlichen zentriert abgestützt (12) wird und die zementgebundenen Materialien (2) in die Schalung (3) eingebracht werden.

3. Verfahren nach Anspruch 1 oder 2,
dadurch **gekennzeichnet**,
daß das Glasrohr (1) vor der Zufuhr der zementgebundenen Materialien (2) mittels einer vorzugsweise vorgespannten Umwicklung (10) umwickelt wird.

4. Rohr aus zementgebundenen Materialien und einer ein Glasrohr aufweisenden Auskleidung,
dadurch **gekennzeichnet**,
daß bereits bei der Rohrherstellung, d.h. vor dem Aushärten der zementgebundenen Materialien diese und das Glasrohr (1) zusammengebracht werden und erst danach die zementgebundenen Materialien (2) zum Aushärten gebracht werden.

5. Rohr nach Anspruch 4,
dadurch **gekennzeichnet**,
daß das Glasrohr (1) mehrteilig aus Glasschalen gebildet ist.

6. Rohr nach Anspruch 4 oder 5,
dadurch **gekennzeichnet**;
daß das Glasrohr (1) von Umwicklungsmaterialien (10) umgeben ist.

7. Rohr nach einem der Ansprüche 4 bis 6,
dadurch **gekennzeichnet**,
daß zwischen dem Glasrohr (1) und den zementgebundenen Materialien (2) stirnseitig ein volumenveränderliches zwängungsfreies Material (5) vorgesehen ist.

8. Rohr nach einem der Ansprüche 4 bis 7,
dadurch **gekennzeichnet**,
daß zwischen dem Glasrohr (1) und den zementgebundenen Materialien (2) Glasfritte (6) und/oder ein anderes Verankerungsmittel (7) vorgesehen ist.

9. Rohr nach einem der Ansprüche 4 bis 8;
dadurch **gekennzeichnet**,
daß das Glasrohr (1) innen- und/oder außenliegend vorgesehen ist.

## Claims

1. Process for producing a pipe of cement bonded materials and a lining having a glass pipe,
characterised in that,
the glass pipe (1) is arranged on a sheathing frame (8) and the cement bonded materials (2) are sprayed thereon with relative rotational movement between the glass pipe (1) and the spraying device (9) for the cement bonded material (2).

2. Process for producing a pipe of cement bonded materials and a lining having a glass pipe, in which the glass pipe (1) is supported,
characterised in that,
the glass pipe (1) is supported (12) substantially centred in a sheathing (3) and the cement bonded materials are fed into the sheathing (3).

3. Process according to claim 1 or 2,
characterised in that,
before the supply of the cement bonded materials (2) the glass pipe (1) is wrapped in a preferably prestressed winding (10).

4. Pipe of cement bonded materials and a lining having a glass pipe,
characterised in that,
in the production of the pipe, i.e. before the setting of the cement bonded materials, these materials and the glass pipe (1) are already brought together, and only thereafter are the cement bonded materials (2) brought to setting.

5. Pipe according to claim 4,
characterised in that,
the glass pipe (1) is formed in several pieces of glass shells.

6. Pipe according to claim 4 or 5,
characterised in that,
the glass pipe (1) is surrounded by wrapping materials (10).

7. Pipe according to any of claims 4 to 6,
characterised in that,
there is provided between the glass pipe (1) and the cement bonded materials (2), at an end, a non-constrained material (5) which can change in volume.

8. Pipe according to any of claims 4 to 7,
characterised in that,
there is provided between the glass pipe (1) and the cement bonded materials (2) glass frit (6) and/or another anchoring means (7).

9. Pipe according to any of claims 4 to 8,
characterised in that,
the glass pipe (1) is provided to lie on the inside and/or on the outside.

## Revendications

1. Procédé pour la fabrication d'un tuyau à base de matériaux liés au ciment et d'un revêtement présentant un tuyau en verre, caractérisé en ce que le tuyau en verre (1) est disposé sur un échafaudage de coffrage (8) et les matériaux (2) liés au ciment sont projetés dessus avec un mouvement relatif de rotation entre le tuyau en verre (1) et le dispositif de projection (9) pour les matériaux liés au ciment (2).

2. Procédé pour la fabrication d'un tuyau à base de matériaux liés au ciment et d'un revêtement présentant un tuyau en verre, avec lequel le tuyau en verre (1) est soutenu, caractérisé en ce que le tuyau en verre (1) est soutenu dans un coffrage (3) de façon sensiblement centrée et les matériaux (2) liés au ciment sont introduits dans le coffrage (3).

3. Procédé selon la revendication 1 ou 2, caractérisé en ce que le tuyau en verre (1) est enveloppé avant l'arrivée des matériaux (2) liés au ciment au moyen d'un enveloppement (10) de préférence prétendu.

4. Tuyau à base de matériaux liés au ciment et d'un revêtement présentant un tuyau en verre, caractérisé en ce que, dès la fabrication du tuyau, c'est-à-dire avant le durcissement des matériaux liés au ciment, ceux-ci et le tuyau en verre (1) sont réunis et seulement après les matériaux (2) liés au ciment sont durcis.

5. Tuyau selon la revendication 4, caractérisé en ce que le tuyau en verre (1) est constitué de plusieurs parties à partir de coques de verre.

6. Tuyau selon la revendication 4 ou 5, caractérisé en ce que le tuyau en verre (1) est entouré de matériaux d'enveloppement (10).

7. Tuyau selon l'une quelconque des revendications 4 à 6, caractérisé en ce que, entre le tuyau en verre (1) et les matériaux (2) liés au ciment, il est prévu sur la face avant un matériau (5) de volume variable et sans contrainte.

8. Tuyau selon l'une quelconque des revendications 4 à 7, caractérisé en ce que, entre le tuyau en verre (1) et les matériaux (2) liés au ciment, il est prévu de la frite de verre (6) et/ou un autre moyen d'ancrage (7).

9. Tuyau selon l'une quelconque des revendications 4 à 8, caractérisé en ce que le tuyau en verre (1) est prévu à l'intérieur et/ou à l'extérieur.
